# EUROPEAN PATENT APPLICATION

(11) **EP 4 358 357 A1**
(43) Date of publication of application: **24.04.2024**
(21) Application number: 23202825.8
(22) Date of filing: 10.10.2023
(51) Int. Cl.: H02J 7/00, H01M 10/48, B25F 5/00

(54) **BATTERY PACK**

(30) Priority: 12.10.2022 CN 202211248325
(71) Applicant: Techtronic Cordless GP, Anderson, SC 29621 (US)
(72) Inventor: GUO, Xi, Dongguan City (CN); WEN, Chao, Dongguan City (CN); WANG, Ren Jie, Dongguan City (CN); MA, Hai Bo, Kwai Chung (HK)
(74) Representative: Novagraaf Group

(57) **Abstract**

The present invention provides a battery pack, which is electrically connectable to an electrical device to supply power or connectable to a charging device to undergo charging. The battery pack comprises a charge level display module and a communication module. The communication module is able to communicate with the electrical device or the charging device when the battery pack is connected to the electrical device or the charging device, so as to obtain fault information of the electrical device or the charging device. The charge level display module is able to issue charge level indication information, to indicate a charge level of the battery pack, and is able to issue first indication information indicating a fault of the electrical device or the charging device in response to the fault information obtained by the communication module. According to the present invention, indication information corresponding to a fault of the electrical device or charging device can be issued by means of the charge level display module of the battery pack; thus, there is no need to provide special monitoring/indicating modules, etc. for the electrical device and charging device, so costs can be lowered. Moreover, the operator need only pay attention to the charge level display module, and this helps to improve the working efficiency.

## Description

### Technical Field

The present invention relates to a battery pack, and in particular to a battery pack used for an electric tool and capable of being charged by a charging device.

### Background Art

When there is no fixed power supply or it is not convenient to directly supply power, a battery pack is usually attached to an electrical device for power supply. Examples of the electrical device may be electric tools that need to be moved frequently, household cleaning devices, kitchen devices, medical devices or the like. In addition, after the charge level of the battery pack is depleted, the battery pack may also be connected to a charging device for charging.

During the power supply or charging process of the battery pack, it is often necessary to continuously or intermittently monitor the states of the battery pack, the electrical device, and the charging device, so as to ensure that these devices are in normal working condition and to find out faults in time when the faults occur. In order to alert the operator in the event of a fault, respectively corresponding indicating means are separately provided for the battery pack, the electrical device and the charging device. This requires the operator to observe at least two different indicating means at the same time in the process of working, diverting his attention from work and thus reducing the working efficiency; furthermore, the number of components is increased, resulting in higher costs.

Therefore, it is hoped to provide an improved battery pack.

### Summary of the invention

An object of the present invention is to provide a battery pack. In the process of using or charging the battery pack, it can communicate with an electrical device or charging device to obtain fault information of the latter, and display fault indication information by means of a charge level display module. This makes it easier for the operator to concentrate on work, thus increasing the working efficiency and lowering the product cost.

According to one aspect of the present invention, a battery pack is provided, the battery pack being electrically connectable to an electrical device to supply power or connectable to a charging device to undergo charging, and the battery pack comprising:
a charge level display module, configured to be able to issue charge level indication information, to indicate a charge level of the battery pack;
a communication module, the communication module being configured to be able to communicate with the electrical device or the charging device when the battery pack is connected to the electrical device or the charging device, so as to obtain fault information of the electrical device or the charging device,
wherein the charge level display module is further configured to be able to issue first indication information indicating a fault of the electrical device or the charging device in response to the fault information obtained by the communication module.

In some embodiments, the fault information at least comprises: deviation of at least one state parameter of the electrical device or the charging device from a normal parameter interval, and/or a hardware fault of the electrical device or the charging device.

In some embodiments, the battery pack is configured to switch off a charging current and be set to an idle mode when the first indication information indicates that a hardware fault has occurred in the charging device.

In some embodiments, the charge level display module is further configured to be able to issue second indication information for indicating a state of the battery pack, the second indication information indicating a type of a fault experienced by the battery pack and/or a change in a state of the battery pack other than charge level.

In some embodiments, the type of the fault at least comprises: deviation of at least one state parameter of the battery pack from a normal parameter interval, and/or a hardware fault of the battery pack.

In some embodiments, the battery pack is configured to switch off a current of the battery pack and be set to a protection mode when the second indication information indicates that a temperature of the battery pack deviates from a normal temperature interval.

In some embodiments, the charge level display module comprises multiple indicator lamps, and is configured to issue the first indication information and the second indication information by illuminating indicator lamps at predetermined positions.

In some embodiments, the illuminated indicator lamps flash at a predetermined frequency.

In some embodiments, flashing frequencies corresponding to the first indication information and the second indication information are different, to enable a user to determine the source of a fault by flashing frequency.

In some embodiments, a display style corresponding to the first indication information and a display style corresponding to the second indication information are the same for the same type of fault.

In some embodiments, the first indication information and the second indication information comprise at least two different display styles presented in a predetermined order.

In some embodiments, the charge level display module comprises a display screen, and is configured to display indication information as text or a pattern via the display screen.

In some embodiments, the charge level display module is configured to continue for a predetermined length of time after indication information has been issued.

In some embodiments, the battery pack is configured such that the charge level display module does not issue indication information when the battery pack is in an undervoltage protection mode and is not being charged.

In some embodiments, the second indication information has a higher priority than the first indication information.

In some embodiments, the battery pack comprises an Internet of Things module, and when the battery pack establishes a connection with the Internet of Things, the charge level display module is able to distinguishably indicate a "connecting" state and a "successfully connected" state.

The use of the battery pack according to the present invention can achieve at least the following beneficial effects:
1. Fault information of the electrical device or charging device connected to the battery pack can be obtained by means of the battery pack, and the charge level display module of the battery pack is used to issue indication information corresponding to the fault information; thus, there is no need to provide special monitoring/indicating modules, etc. for the electrical device and charging device, so costs can be lowered.
2. In the process of using the battery pack to perform work, the operator need only pay attention to the charge level display module of the battery pack, and does not need to divert attention to the electrical device or charging device; this makes it easier to concentrate on work, thus increasing the working efficiency.

### Brief description of the drawings

For a better understanding of the above and other objects, features, advantages and functions of the present invention, reference may be made to the preferred embodiments shown in the drawings. In the drawings, identical reference signs denote identical components. It should be understood by a person skilled in the art that the drawings are intended to schematically illustrate preferred embodiments of the present invention, without imposing any restrictions on the scope of the present invention, and that the components in the drawings are not drawn to scale.
Fig. 1 is a schematic diagram of a battery pack according to the present invention, and an electrical device and a charging device electrically connected to the battery pack.
Fig. 2 is a schematic diagram of the battery pack shown in Fig. 1, when connected to an electrical device.
Fig. 3 is a schematic diagram of the battery pack shown in Fig. 1, when connected to a charging device; and
Fig. 4 is exemplary explanations of charge level indication information issued using the charge level display module of the battery pack of the present invention.
Fig. 5 is exemplary explanations of first indication information and second indication information issued using the charge level display module of the battery pack of the present invention.

### Key to reference signs:

| | |
|---|---|
| 100 | battery pack |
| 110 | housing |
| 120 | battery unit |
| 130 | communication module |
| 140 | charge level display module |
| 150 | trigger switch |
| 200 | electrical device |
| 300 | charging device |
| A1 - A4 indicator lamps | |

### Detailed Description of the Invention

Specific embodiments of the present invention are now described in detail with reference to the drawings. The embodiments described here are merely preferred embodiments according to the present invention. A person skilled in the art could conceive of other ways of implementing the present invention on the basis of the preferred embodiments, and such other ways shall likewise fall within the scope of the present invention.

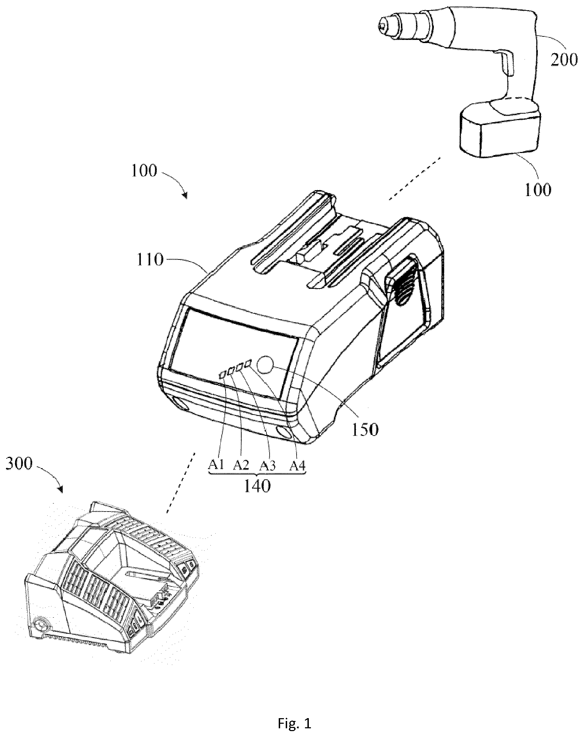

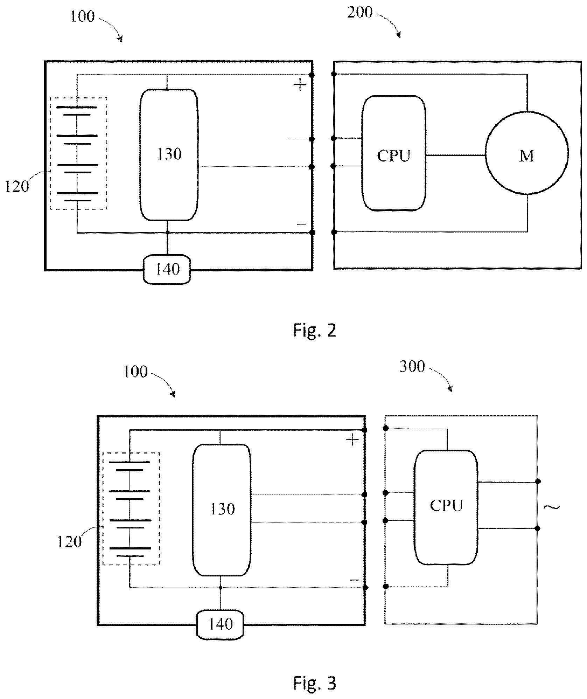

The present invention provides a battery pack. As shown in Figs. 1 to 3, a battery pack 100 according to some preferred embodiments comprises a housing 110 and a battery unit 120 composed of a multiple cells. The battery unit 120 is arranged in an accommodating space formed by the housing 110, and used for storing electrical energy. The housing 110 is further provided with a connection structure (not shown), which may be connected to another connection structure with a complementary shape on an electrical device 200, so as to fix the battery pack 100 to the electrical device, and corresponding electric terminals of the two are electrically connected to supply power to the electrical device. Specifically, the electrical device 200 may be an electric tool, a household cleaning device, a kitchen device, a medical device or the like. Preferably, the cells of the battery unit 120 may be rechargeable secondary cells. The battery pack 100 may be connected to a charging device 300 for charging when the charge level drops.

A charge level display module 140 formed of multiple consecutively arranged indicator lamps (e.g. LEDs) is provided on the housing 110. In the embodiment shown in Fig. 1, the charge level display module 140 comprises four LEDs A1 - A4 arranged in a straight line. By illuminating the number of LEDs corresponding to the current charge level of the battery pack 100, the charge level display module 140 can issue charge level indication information. In this way, the operator can find out the current charge level of the battery pack 100 by means of the charge level indication information. It will be understood that the number and arrangement of indicator lamps in different embodiments can vary according to actual needs. In some embodiments, preferably, the charge level display module 140 may further comprise a display screen, and thus can display charge level indication information by text or pattern.

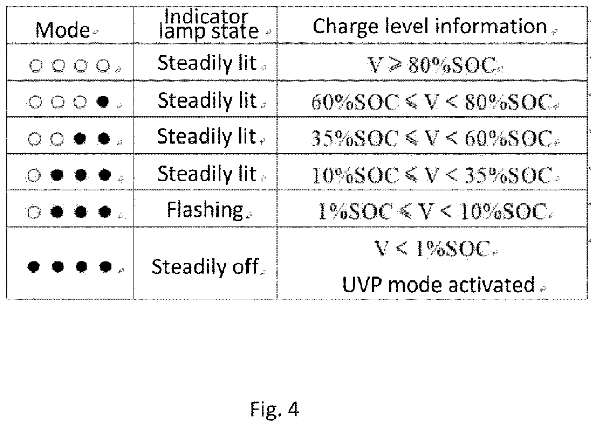

Fig. 4 shows some exemplary explanations of charge level indication information. Here, 100% indicates that the battery pack 100 is in a fully charged state. When the current charge level of the battery pack 100 is greater than 80%, all four indicator lamps A1 - A4 are illuminated, and in a steadily lit state. When the current charge level of the battery pack 100 is lower than 80% but greater than or equal to 60%, the first three indicator lamps A1 - A3 are all illuminated, and in a steadily lit state, while A4 is off. When the current charge level of the battery pack 100 is lower than 60% but greater than or equal to 35%, the first two indicator lamps A1 - A2 are both illuminated, and in a steadily lit state, while A3 - A4 are off. When the current charge level of the battery pack 100 is lower than 35% but greater than or equal to 10%, only the first indicator lamp A1 is illuminated, and in a steadily lit state, while A2 - A4 are off. When the current charge level of the battery pack 100 is lower than 10% but greater than or equal to 1%, only the first indicator lamp A1 is illuminated, and in a flashing state, while A2 - A4 are off. When the current charge level of the battery pack 100 is lower than 1%, an undervoltage protection (UVP) mode of the battery pack 100 is activated, at which time the four indicator lamps A1 - A4 are all in the off state, so as to conserve charge, which helps to extend the service life of the battery pack 100.

Continuing to refer to Figure 1, the battery pack 100 may also be provided with a trigger switch 150, which may take the form of a button, a toggle switch, a touch-sensitive element, etc. The charge level display module 140 may be configured to issue the abovementioned charge level indication information and continue for a predetermined length of time (e.g. 3 s) in response to the operator triggering the trigger switch 150. However, when the battery pack 100 is in the UVP mode and is not being charged, the charge level display module 140 will not issue charge level indication information even if the trigger switch 150 is triggered. In addition, the charge level display module 140 may be configured to automatically and continuously issue charge level indication information in response to the battery pack 100 being in a charging state, with no need for the trigger switch 150 to be triggered.

In addition, according to the present invention, the battery pack 100 further comprises a communication module 130. When the battery pack 100 is connected to the electrical device 200 or charging device 300, the communication module 130 can communicate with a corresponding communication module 130 in the electrical device 200 or charging device 300. For example, in some embodiments, the battery pack 100 may comprise four electric terminals, which may comprise a duplex communication port. The battery pack 100 can establish data interaction with the electrical device 200 or charging device 300 through the duplex communication port. Once communication has been successfully established, the communication module 130 of the battery pack 100 can receive instruction data of the electrical device 200 or the charging device 300, in particular instruction data indicating a fault (such instruction data may be called fault information). The fault may specifically be an error state, overtemperature protection state, etc. of the electrical device 200 or the charging device 300. The communication module 130 may preferably be part of a battery management system (BMS) of the battery pack 100. Alternatively, the communication module 130 may be a separate operating module.

Further, when the communication module 130 obtains fault information indicating a fault in the electrical device 200 or the charging device 300, the charge level display module 140 may issue first indication information in response to the fault information, to indicate to the operator the fault in the electrical device 200 or the charging device 300. In this way, the operator can learn that the electrical device 200 or the charging device 300 is currently experiencing a fault by reading fault indication information issued by the charge level display module 140, and learn the specific form of the fault from the content of the fault indication information. Here, the fault indication information for the electrical device 200 or the charging device 300 may be referred to as first indication information.

In an embodiment in which the charge level display module 140 comprises multiple indicator lamps, fault indication information corresponding to different fault types may be issued by illuminating indicator lamps at different positions. Each indicator lamp may have two states: illuminated and off, so the charge level display module 140 can issue at least 2ⁿ different types of fault indication information, where n is the number of indicator lamps. Preferably, when issuing fault indication information, the illuminated indicator lamp also flashes at a predetermined frequency. Further preferably, each item of fault indication information may comprise two different indicator lamp display styles, and the indicator lamp can switch between different modes. Moreover, the durations of different items of fault indication information may also differ somewhat. In this way, the charge level display module 140 can issue a greater number of types of fault indication information, and can thus indicate a greater variety of fault types.

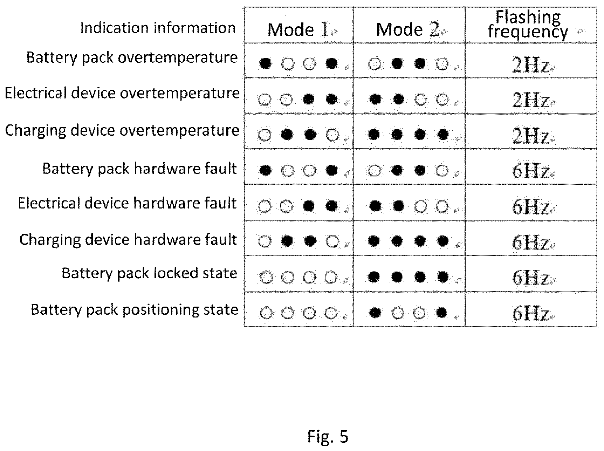

Fig. 5 shows some exemplary explanations of fault indication information. For example, the fault type may comprise deviation of a state parameter of the electrical device 200 or the charging device 300 from a normal parameter interval. The state parameter may be temperature; for example, the temperature of the electrical device 200 or the charging device 200 is too high or too low (collectively referred to as overtemperature). In addition, the fault type may comprise a hardware fault of the electrical device 200 or the charging device 300; specifically, this may be for example a temperature sensing element (NTC) fault, a field-effect transistor (MOSFET) fault, and faults in other components, etc.

As shown in Fig. 5, when the communication module 130 of the battery pack 100 obtains information that an overtemperature fault has occurred in the electrical device 200, the charge level display module 140 issues corresponding fault indication information by switching back and forth between a mode 1, in which A1 - A2 are illuminated and A3 - A4 are off, and a mode 2, in which A1 - A2 are off and A3 - A4 are illuminated. The flashing frequency of the indicator lamps is 2 Hz. Mode 1 and mode 2 form a display style of the charge level display module 140.

As shown in Figure 5, when the charging device 300 experiences an overtemperature fault, the charge level display module 140 issues corresponding fault indication information by switching back and forth between a mode 1, in which A1 and A4 are illuminated and A2 - A3 are off, and a mode 2 in which A1 - A4 are all off. The flashing frequency of the indicator lamps is 2 Hz.

In addition, it will be understood that in the case where the electrical device 200 comprises a motor and an output shaft, a state parameter deviating from a normal parameter interval may also be a rotation speed of the motor or output shaft. The battery pack 100 may set a corresponding indicator lamp display style, frequency and duration for a fault whereby the rotation speed deviates from the normal parameter interval.

As shown in Figure 5, when the communication module 130 of the battery pack 100 obtains information that a hardware fault has occurred in the electrical device 200, the charge level display module 140 issues corresponding fault indication information by switching back and forth between a mode 1, in which A1 - A2 are illuminated and A3 - A4 are off, and a mode 2, in which A1 - A2 are off and A3 - A4 are illuminated. The flashing frequency of the indicator lamps is 6 Hz.

Continuing to refer to Figure 5, when the charging device 300 experiences a hardware fault, the charge level display module 140 issues corresponding fault indication information by switching back and forth between a mode 1, in which A1 and A4 are illuminated and A2 - A3 are off, and a mode 2 in which A1 - A4 are all off. The flashing frequency of the indicator lamps is 6 Hz. Preferably, in the event of a hardware fault in the charging device 300, in addition to displaying corresponding fault indication information via the charge level display module 140, the battery pack 100 is further configured to switch off a charging current via a switch in a circuit, and then the battery pack 100 is set to an idle mode.

In addition to fault indication information for the electrical device 200 or the charging device 300, according to the present invention, the charge level display module 140 of the battery pack 100 is also configured to be able to issue second indication information for the battery pack 100 itself. The second indication information is used to indicate a fault in the battery pack 100, or a change in a state of the battery pack 100 other than the charge level.

The fault in the battery pack 100 may comprise deviation of a state parameter of the battery pack 100 from a normal parameter interval. The state parameter may be temperature, voltage, current, etc.; for example, the temperature of the electrical device 200 or the charging device 200 is too high or too low (collectively referred to as overtemperature). In addition, the fault type may comprise a hardware fault of the battery pack 100; specifically, this may be for example a temperature sensing element (NTC) fault, faults in the cells and other components, etc. The state changes or fault information of the battery pack 100 mentioned above may be obtained by a BMS performing sensing via a corresponding sensor and comparing a sensing result with a normal value pre-stored in the BMS.

As shown in Fig. 5, when the BMS determines information that an overtemperature fault has occurred in the battery pack 100 (the temperature of the battery pack 100 being too high or too low), the charge level display module 140 issues corresponding fault indication information by switching back and forth between a mode 1, in which A2 and A3 are illuminated and A1 and A4 are off, and a mode 2, in which A2 and A3 are off and A1 and A4 are illuminated. The flashing frequency of the indicator lamps is 2 Hz. Further, in the event of an overtemperature fault in the battery pack 100, in addition to displaying corresponding fault indication information via the charge level display module 140, the battery pack 100 is further configured to switch off a current (e.g. a power supply current or charging current) via a switch in a circuit, and then set the battery pack 100 to a protection mode.

When the BMS judges that a hardware fault has occurred in the battery pack 100, the charge level display module 140 issues corresponding fault indication information by switching back and forth between a mode 1, in which A2 and A3 are illuminated and A1 and A4 are off, and a mode 2, in which A2 and A3 are off and A1 and A4 are illuminated. The flashing frequency of the indicator lamps is 6 Hz.

The change in state of the battery pack 100 may for example be that the battery pack 100 is set to a locked state (lock state) or positioning state (location state), or the battery pack is currently in a state of connection to the Internet of Things (IoT).

As shown in Figure 5, when the battery pack 100 is set to the locked state, the charge level display module 140 issues corresponding indication information by switching back and forth between a mode 1 in which A1 - A4 are all illuminated, and a mode 2 in which A1 - A4 are all off. The flashing frequency of the indicator lamps is 6 Hz. When battery pack 100 is set to the positioning state, the charge level display module 140 issues corresponding indication information by switching back and forth between a mode 1 in which A1 - A4 are all illuminated, and a mode 2 in which A1 and A4 are off and A2 and A3 are illuminated. The flashing frequency of the indicator lamps is 6 Hz.

In other embodiments, the source of the displayed information, e.g. from the battery pack, the electrical device or the charging device, preferably may be determined by means of the flashing frequency of the charge level display module of the battery pack. That is, the flashing frequency of the charge level display module may be set differently for different fault sources. For example, flashing may be performed at 2 Hz for fault information of the charging device/electrical device, and flashing may be performed at 6 Hz for fault information of the battery pack. This makes it easier for the user to determine the source of the fault.

In other embodiments, the display style of the charge level display module is preferably the same for faults of the same type. For example, with regard to overtemperature faults, the same display style is used for overtemperature faults in the battery pack and overtemperature faults in the charging device/electrical device, but different flashing frequencies are used. For example, with regard to hardware faults, the same display style is used for hardware faults in the battery pack and hardware faults in the charging device/electrical device, but different flashing frequencies are used. An advantage of this is that it is easier for the user to remember and identify different display styles.

Preferably, the first indication information for the electrical device 200 or the charging device 300 and the second indication information for the battery pack 100 may have different priorities. For example, the second indication information has priority over the first indication information, so when the battery pack and the electrical device/charging device experience faults at the same time, the battery pack prioritizes display of the battery pack related fault.

In some embodiments, the battery pack 100 comprises an Internet of Things (IoT) module. When the battery pack 100 establishes a connection with the Internet of Things, the charge level display module may indicate a state such as "connecting" or "successfully connected" via a specific style. For example, "connecting" may be indicated by flashing of a specific indicator lamp, and "connection successful" may be indicated by continuous illumination of a specific indicator lamp.

The above description of various embodiments of the present invention is provided to a person of ordinary skill in the relevant art for descriptive purposes. The present invention is not intended to be exclusive or limited to a single disclosed embodiment. On the basis of what is described above, a person of ordinary skill in the art will understand various substitutes for and variants of the present invention. Therefore, although some alternative embodiments have been described specifically, a person of ordinary skill in the art will understand or develop with relative ease other embodiments. The present invention is intended to include all substitutes for, alterations to, and variants of the present invention described herein, as well as other embodiments falling within the spirit and scope of the present invention described above.

## Claims

1. A battery pack, the battery pack (100) being electrically connectable to an electrical device (200) to supply power or connectable to a charging device (300) to undergo charging, **characterized in that** the battery pack (100) comprises:
a charge level display module, configured to be able to issue charge level indication information, to indicate a charge level of the battery pack (100);
a communication module (130), the communication module (130) being configured to be able to communicate with the electrical device (200) or the charging device (300) when the battery pack (100) is connected to the electrical device (200) or the charging device (300), so as to obtain fault information of the electrical device (200) or the charging device (300),
wherein the charge level display module is further configured to be able to issue first indication information indicating a fault of the electrical device (200) or the charging device (300) in response to the fault information obtained by the communication module (130).

2. The battery pack as claimed in claim 1, **characterized in that** the fault information at least comprises: deviation of at least one state parameter of the electrical device (200) or the charging device (300) from a normal parameter interval, and/or a hardware fault of the electrical device (200) or the charging device (300).

3. The battery pack as claimed in claim 2, **characterized in that** the battery pack (100) is configured to switch off a charging current and be set to an idle mode when the first indication information indicates that a hardware fault has occurred in the charging device (300).

4. The battery pack as claimed in claim 1, **characterized in that** the charge level display module is further configured to be able to issue second indication information for indicating a state of the battery pack (100), the second indication information indicating a type of a fault experienced by the battery pack (100) and/or a change in a state of the battery pack (100) other than charge level.

5. The battery pack as claimed in claim 4, **characterized in that** the type of the fault at least comprises: deviation of at least one state parameter of the battery pack (100) from a normal parameter interval, and/or a hardware fault of the battery pack (100).

6. The battery pack as claimed in claim 5, **characterized in that** the battery pack (100) is configured to switch off a current of the battery pack (100) and be set to a protection mode when the second indication information indicates that a temperature of the battery pack (100) deviates from a normal temperature interval.

7. The battery pack as claimed in any one of claims 4-6, **characterized in that** the charge level display module comprises multiple indicator lamps, and is configured to issue the first indication information and the second indication information by illuminating indicator lamps at predetermined positions.

8. The battery pack as claimed in claim 7, **characterized in that** the illuminated indicator lamps flash at a predetermined frequency.

9. The battery pack as claimed in claim 8, **characterized in that** flashing frequencies corresponding to the first indication information and the second indication information are different, to enable a user to determine the source of a fault by flashing frequency; preferably, a display style corresponding to the first indication information and a display style corresponding to the second indication information are the same for the same type of fault.

10. Battery pack according to Claim 7, **characterized in that** the first indication information and the second indication information comprise at least two different display styles presented in a predetermined order.

11. Battery pack according to any one of Claims 1 - 6, **characterized in that** the charge level display module comprises a display screen, and is configured to display indication information as text or a pattern via the display screen.

12. Battery pack according to any one of Claims 1 - 6, **characterized in that** the charge level display module is configured to continue for a predetermined length of time after indication information has been issued.

13. Battery pack according to any one of Claims 1 - 6, **characterized in that** the battery pack (100) is configured such that the charge level display module does not issue indication information when the battery pack (100) is in an undervoltage protection mode and is not being charged.

14. Battery pack according to any one of Claims 4 - 6, **characterized in that** the second indication information has a higher priority than the first indication information.

15. Battery pack according to any one of Claims 1 - 6, **characterized in that** the battery pack comprises an Internet of Things module, and when the battery pack establishes a connection with the Internet of Things, the charge level display module is able to distinguishably indicate a "connecting" state and a "successfully connected" state.
